# EUROPEAN PATENT APPLICATION

(11) **EP 4 465 177 A1**
(43) Date of publication of application: **20.11.2024**
(21) Application number: 22920231.2
(22) Date of filing: 13.01.2022
(51) Int. Cl.: G06F 9/50

(54) **COMPUTATION OFFLOADING SYSTEM, COMPUTATION OFFLOADING METHOD, AND PROGRAM**

(71) Applicant: Nippon Telegraph And Telephone Corporation, Chiyoda-ku Tokyo 100-8116 (JP)
(72) Inventor: SAITO, Shogo, Musashino-shi, Tokyo 180-8585 (JP); FUJIMOTO, Kei, Musashino-shi, Tokyo 180-8585 (JP); OTANI, Ikuo, Musashino-shi, Tokyo 180-8585 (JP); NATORI, Ko, Musashino-shi, Tokyo 180-8585 (JP)
(74) Representative: Dehns
(86) International application number: PCT/JP2022/000925
(87) International publication number: WO 2023/135706

(57) **Abstract**

A server (200) includes a userland APL (230) that cooperates with an accelerator (212) while bypassing an OS (220). The userland APL (230) includes an ACC-NIC common data parsing part (232) that parses reception data in which an input data format of an ACC utilizing function and an NIC reception data format are made common.

## Description

### Technical Field

The present invention relates to an arithmetic processing offload system, an arithmetic processing offload method, and an arithmetic processing offload program.

### Background Art

With the progress of cloud computing, it is becoming more common to offload a part of processing including a large amount of arithmetic operation from a client machine deployed at a user site to a server at a remote site (such as a data center located in the vicinity of the user) via a network (hereinafter, referred to as an NW) in order to simplify the configuration of the client machine.

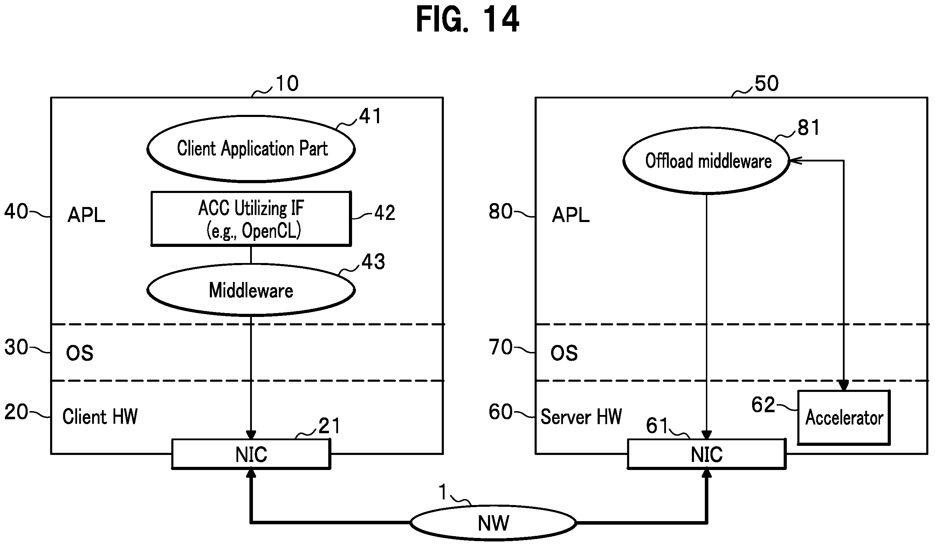

FIG. 14 is a diagram for explaining the device configuration of an offload system for offloading via a NW.

As illustrated in FIG. 14, the offload system for offloading via an NW 1 includes a client 10 deployed at a user site and a server 50 connected to client 10 via NW 1.

Client 10 includes client hardware (HW) 20, an operating system (OS) 30, and an application (hereinafter, referred to as an APL as appropriate) 40.

APL 40 includes a client application part 41, an accelerator (hereinafter, referred to as an ACC as appropriate) utilizing IF 42, and middleware 43. ACC utilizing IF 42 conforms to an ACC (Accelerator: computation accelerator device) utilizing IF specification including Open Computing Language (OpenCL) or the like.

Client 10 is not equipped with a computation accelerator device (ACC) such as a field programmable gate array (FPGA)/graphics processing Unit (GPU).

Client 10 has a network interface card (NIC) 21 installed on client HW 20.

Client application part 41 is a program executed in a user space. The offload system for offloading via the NW is constructed on the premise of utilizing prescribed application programming interfaces (APIs) such as OpenCL, and performs input and output with these APIs.

Client application part 41 is an application that operates on client 10 and conforms to a standard API for accessing an ACC. Client application part 41 operating on client 10 is supposed to perform image processing and the like and thus requires low arithmetic operation latency.

Server 50 includes server HW 60, an OS 70, an APL 80, and an accelerator (ACC) 62 on server HW 60. APL 80 includes offload middleware 81.

Server 50 has one or more accelerators 62 installed.

Server 50 has an NIC 61 installed on server HW 60.

Client 10 and server 50 are capable of communicating with each other via respective NICs 21 and 61 and NW 1.

The offload system illustrated in FIG. 14 preferably satisfies the following requirements 1 to 3.

Requirement 1: No change is to be made to client application part 41 (transparency).

Requirement 2: Overhead in ACC arithmetic operation offloading via NW 1 is small (low latency).

Requirement 3: The fluctuation range of the overhead in ACC arithmetic operation offloading via NW 1 is small (low jitter).

As an existing technique of transparent accelerator processing offloading via a NW, there is "remote offloading of accelerator standard IF functions by packetizing and NW transferring a function name and arguments" (see Non-Patent Literature 1).

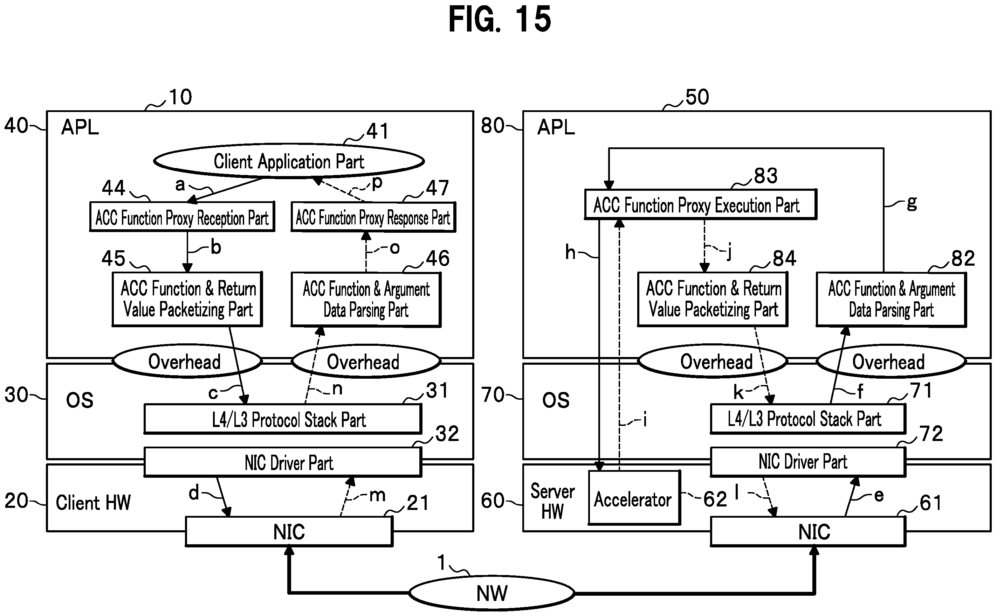

FIG. 15 is a diagram for explaining an accelerator standard IF offload system, described in Non-Patent Literature 1, using an OS protocol stack. In the description of FIG. 15, the same components as those in FIG. 14 are denoted by the same reference signs.

The solid arrows in FIG. 15 indicate an offload outward path, and the dashed arrows in FIG. 15 indicate an offload return path.

As illustrated in FIG. 15, the accelerator standard IF offload system includes a client 10 and a server 50 connected to the client 10 via an NW 1.

Client 10 illustrated in FIG. 15 includes client HW 20, an OS 30, and an application (APL) 40. In addition, an NIC 21 is installed on client HW 20.

OS 30 includes an L4/L3 protocol stack part 31 and an NIC driver part 32.

APL 40 includes a client application part 41, an ACC function proxy reception part 44, an ACC function & return value packetizing part 45, an ACC function & argument data parsing part 46, and an ACC function proxy response part 47. Hereinafter, in the present description, "&" is used in the meaning of "and".

Server 50 illustrated in FIG. 15 includes server HW 60, an OS 70, an APL 80, and on server HW 60, an NIC 61 and an accelerator 62.

OS 70 includes an L4/L3 protocol stack part 71 and an NIC driver part 72.

APL 80 includes an ACC function & argument data parsing part 82, an ACC function proxy execution part 83, and an ACC function & return value packetizing part 84.

Next, the offload outward path and the offload return path will be described.

### Offload Outward Path

Client application part 41 of client 10 has input and output with a prescribed API such as OpenCL.

ACC function proxy reception part 44 is implemented as middleware having an IF compatible with the prescribed API. ACC function proxy reception part 44 has an IF equivalent to a prescribed API such as OpenCL, and receives API calls from client application part 41. ACC function proxy reception part 44 receives, as an input, a function name and arguments from client application part 41 (see reference sign a in FIG. 15). ACC function proxy reception part 44 passes, as an output, the function name and arguments to ACC function & return value packetizing part 45 (see reference sign b in FIG. 15).

The ACC function & return value packetizing part 45 passes a transmission packet to L4/L3 protocol stack part 31 (see reference sign c in FIG. 15) based on the received function name and arguments.

L4/L3 protocol stack part 31 makes the inputted packet conform to the L4/L3 protocol, and NIC driver part 32 passes the transmission packet conforming to the L4/L3 protocol to NIC 21 (see reference sign d in FIG. 15).

NIC 21 transmits the packet to NIC 61 of server 50 connected thereto via NW 1.

NIC driver part 72 of server 50 receives the packet from NIC 61 (see reference sign e in FIG. 15) and passes the packet to L4/L3 protocol stack part 71. L4/L3 protocol stack part 71 converts the reception packet conforming to the L4/L3 protocol into processible packet data and passes the packet data to ACC function & argument data parsing part 82 (see reference sign f in FIG. 15).

ACC function & argument data parsing part 82 deserializes the packet data and passes the function name and execution result to ACC function proxy execution part 83 (see reference sign g in FIG. 15).

ACC function proxy execution part 83 offloads the accelerator function and argument data based on the received function name and execution result to accelerator (ACC) 62 (see reference sign h in FIG. 15) for execution.

### Offload Return Path

Accelerator 62 executes the ACC function and passes the function name and function execution result to ACC function proxy execution part 83 (see reference sign i in FIG. 15).

ACC function proxy execution part 83 passes the function name and function execution result passed from accelerator 62 to ACC function & return value packetizing part 84 (see reference sign j in FIG. 15).

ACC function & return value packetizing part 84 packetizes the passed function name and function execution result and passes the packetized function name and function execution result to L4/L3 protocol stack part 71 (see reference sign k in FIG. 15).

L4/L3 protocol stack part 71 makes the packet data conform to the L4/L3 protocol, and NIC driver part 72 passes the packet data conforming to the L4/L3 protocol to NIC 61 (see reference sign 1 in FIG. 15).

NIC 61 transmits the packet to NIC 21 of the client 10 connected thereto via NW 1.

NIC driver part 32 of client 10 receives the packet from NIC 21 (see reference sign m in FIG. 15) and passes the packet to L4/L3 protocol stack part 31. L4/L3 protocol stack part 31 converts the reception packet conforming to the L4/L3 protocol into processible packet data and passes the packet data to ACC function & argument data parsing part 46 (see reference sign n in FIG. 15).

ACC function & argument data parsing part 46 deserializes the function name and execution result to obtain serial data, and passes the serial data to ACC function proxy response part 47 (see reference sign o in FIG. 15).

ACC function proxy response part 47 passes the received serial data to client application part 41 (see reference sign p in FIG. 15) as accelerator processed data.

In the above-described configuration, client 10 and server 50 both use a dedicated NIC (for example, RDMA HCA: Remote Direct Memory Access Host Channel Adapter) having protocol stack processing functions. Client 10 and the server 50 both make OSes 30 and 70 include the protocol stack function.

### Citation List

### Non-Patent Literature

Non-Patent Literature 1: The rCUDA Team, "rCUDA v20.07alpha User's Guide", July, 2020., [online], [searched on December 24, 2021], Internet <URL:
http://www.rcuda.net/pub/rCUDA_guide.pdf>

### Summary of Invention

### Technical Problem

However, in the offload system described in Non-Patent Literature 1, as illustrated in FIG. 13, L4/L3 protocol stack part 31 of OS 30, and ACC function & argument data parsing part 46 and ACC function & return value packetizing part 45, are independent of each other. Similarly, L4/L3 protocol stack part 71 of OS 70, and ACC function & argument data parsing part 82 and ACC function & return value packetizing part 84, are independent of each other. Therefore, as an overhead occurs in the cooperation (hereinafter, cooperation means being capable of performing processing with performing parsing and generating a packet) between the L4/L3 protocol stack function of the OS and the ACC function & argument data, there is a problem in that it is difficult to achieve low latency.

The present invention has been made in view of such a background, and an object of the present invention is to reduce data concatenation and conversion processing in the event of a server offloading reception data received in a distributed manner to an accelerator, to achieve low latency.

### Solution to Problem

In order to solve the above-described problems, the present invention provides an arithmetic processing offload system including a client and a server connected thereto via a network and a network interface card (NIC), the client configured to offload specific processing of an application to an accelerator installed in the server in order to perform arithmetic processing, wherein the server includes a userland application configured to cooperate with the accelerator while bypassing an OS, and wherein the userland application includes an accelerator (ACC)-NIC common data parsing part configured to parse reception data in which an input data format of an ACC utilizing function and an NIC reception data format are made common.

### Advantageous Effects of Invention

According to the present invention, it is possible to reduce the data concatenation and conversion processing in the event of the server offloading reception data received in a distributed manner to the accelerator, achieving low latency.

### BRIEF DESCRIPTION OF THE DRAWINGS

FIG. 1 is a schematic configuration diagram of an arithmetic processing offload system according to an embodiment of the present invention.
FIG. 2 is a diagram for explaining an offload processing flow of the arithmetic processing offload system according to the embodiment of the present invention.
FIG. 3 is a data structure diagram of an accelerator function argument data packet, which corresponds to output data of an ACC-NIC common data creation part of the arithmetic processing offload system according to the embodiment of the present invention and which corresponds to an input to an ACC-NIC common data parsing part.
FIG. 4 is a data structure diagram of an accelerator function return value packet of the arithmetic processing offload system according to the embodiment of the present invention.
FIG. 5 is a flowchart illustrating the transmission-time offload processing by a client of the arithmetic processing offload system according to the embodiment of the present invention.
FIG. 6 is a flowchart illustrating the transmission-time offload processing by the client of the arithmetic processing offload system according to the embodiment of the present invention.
FIG. 7A is a flowchart illustrating the offload processing of a server of the arithmetic processing offload system according to the embodiment of the present invention.
FIG. 7B is a flowchart illustrating the offload processing of the server of the arithmetic processing offload system according to the embodiment of the present invention.
FIG. 8 is a flowchart illustrating parse processing of the ACC-NIC common data parsing part of the arithmetic processing offload system according to the embodiment of the present invention.
FIG. 9 is a data structure diagram of data on a memory including successive data address storage areas of accelerator function argument data packets of the arithmetic processing offload system according to the embodiment of the present invention.
FIG. 10 is a flowchart illustrating the reception-time offload processing by the client of the arithmetic processing offload system according to the embodiment of the present invention.
FIG. 11 is a schematic configuration diagram of an arithmetic processing offload system according to <Modification 1> of the embodiment of the present invention.
FIG. 12 is a schematic configuration diagram of an arithmetic processing offload system according to <Modification 2> of the embodiment of the present invention.
FIG. 13 is a hardware configuration diagram illustrating an example of a computer that implements the functions of the server of the arithmetic processing offload system according to the embodiment of the present invention.
FIG. 14 is a diagram for explaining the device configuration of an offload system for offloading via an NW.
FIG. 15 is a diagram for explaining an accelerator standard IF offload system, described in Non-Patent Literature 1, using an OS protocol stack.

### DESCRIPTION OF EMBODIMENTS

Hereinafter, an arithmetic processing offload system and the like in an embodiment (hereinafter, referred to as "the present embodiment") for carrying out the present invention will be described with reference to the drawings.

### (Embodiment)

### [Outline]

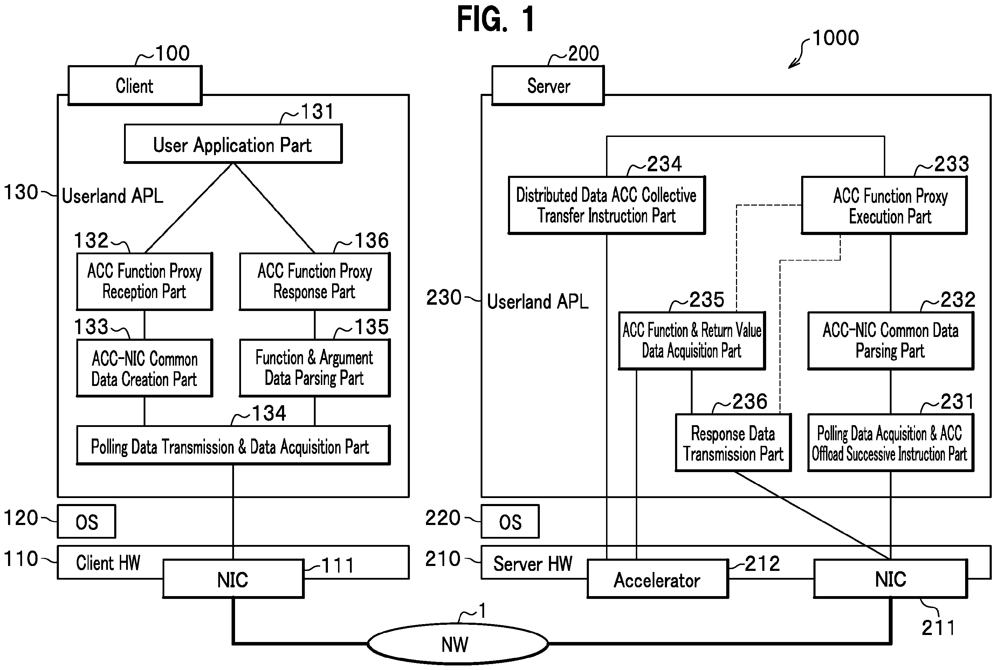

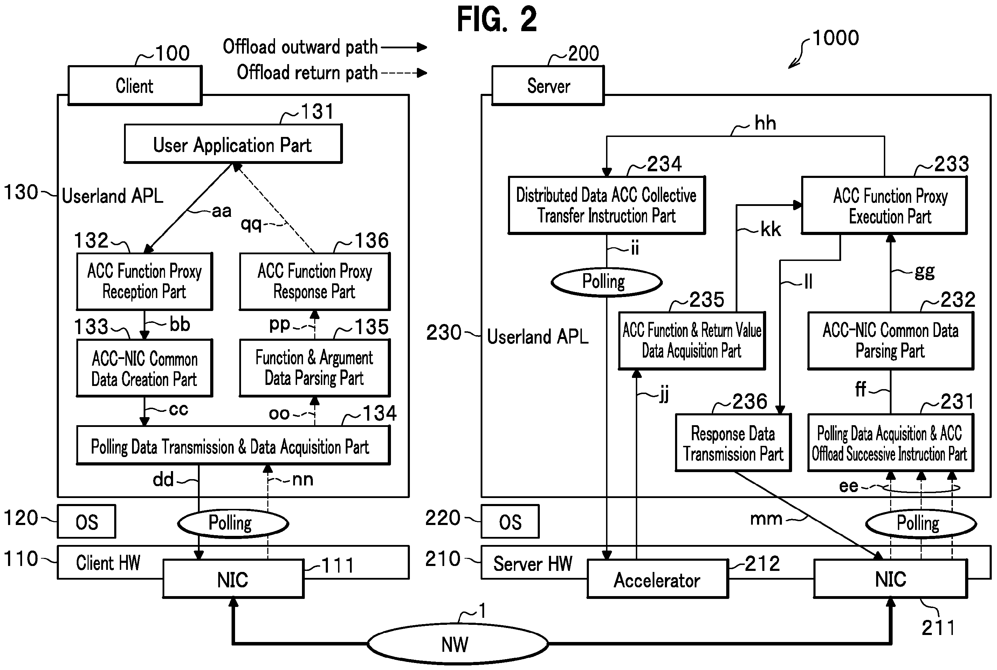

FIG. 1 is a schematic configuration diagram of an arithmetic processing offload system according to an embodiment of the present invention. The present embodiment is an example applied to offload processing using eXpress Data Path (XDP)/Berkeley Packet Filter (eBPF) of Linux (registered trademark). FIG. 2 is a diagram for explaining an offload processing flow of arithmetic processing offload system 1000 illustrated in FIG. 1. Note that the offload processing flow illustrated in FIG. 2 will be described in detail in the description of the operation.

As illustrated in FIGS. 1 and 2, arithmetic processing offload system 1000 includes a client 100 and a server 200 connected to client 100 via an NW 1.

In arithmetic processing offload system 1000, client 100 offloads specific processing of an application to an accelerator 212 installed in server 200 to perform arithmetic processing.

### [Client 100]

Client 100 includes client HW 110, an OS 120, and a userland APL 130.

### «Client HW 110»

Client HW 110 includes an NIC 111.

NIC 111 is NIC hardware that implements an NW interface.

In <Transmission Pattern>, NIC 111 receives, as an input, a "transmission packet" from a polling data transmission & data acquisition part 134 via a not-illustrated NIC driver. In <Transmission Pattern>, NIC 111 passes, as an output, the "transmission packet" to server HW 210 connected thereto via NW 1.

In <Reception Pattern>, NIC 111 receives, as an input, a "reception packet" from server 200 connected thereto via NW 1. In <Reception Pattern>, NIC 111 passes, as an output, the "reception packet" to polling data transmission & data acquisition part 134 via the not-illustrated NIC driver.

### «Userland APL 130»

Userland APL 130 includes a user application part 131, an ACC function proxy reception part 132, an ACC-NIC common data creation part 133, polling data transmission & data acquisition part 134, a function & argument data parsing part 135, and an ACC function proxy response part 136.

### <User Application Part 131>

User application part 131 is a program executed in a user space. User application part 131 is constructed on the premise of utilizing prescribed APIs, such as OpenCL, and performs input and output through these APIs. User application part 131 has, as an output, a "function name and arguments" for ACC function proxy reception part 132. User application part 131 receives, as an input, a function execution result from ACC function proxy response part 136.

User application part 131 may have a result output destination such as image drawing on a display as another output destination.

### <ACC Function Proxy Reception Part 132>

ACC function proxy reception part 132 is implemented as middleware having an IF compatible with a prescribed API. ACC function proxy reception part 132 has an IF equivalent to a prescribed API such as OpenCL and receives API calls from a user. ACC function proxy reception part 132 is prepared as a binary file separate from the prescribed user application and is implemented in a "dynamic library format", in which dynamic linking and calls are performed at runtime.

ACC function proxy reception part 132 receives, as an input, a "function name and arguments" from user application part 131. ACC function proxy reception part 132 passes, as an output, the "function name and arguments" to ACC-NIC common data creation part 133.

ACC function proxy reception part 132 may be in a "static library format", in which linking to the user application is performed at the time of program generation and the execution is performed in a integrated form.

### <ACC-NIC Common Data Creation Part 133>

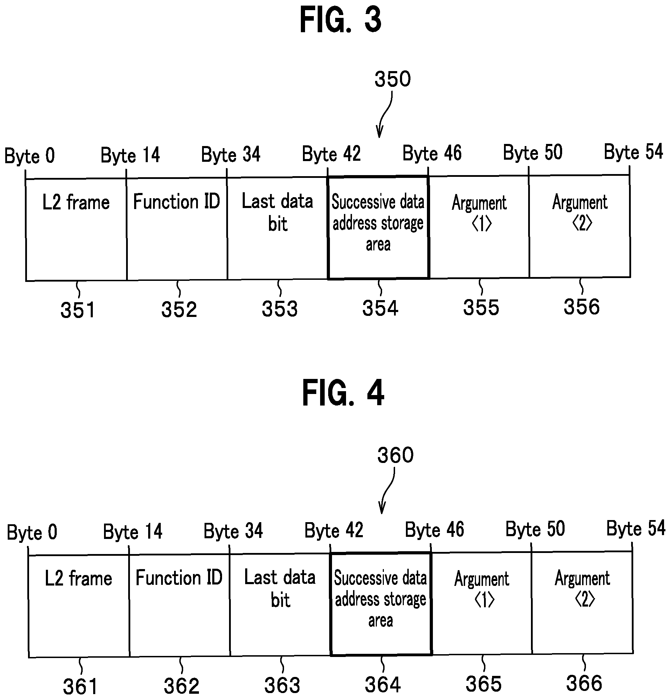

ACC-NIC common data creation part 133 converts the inputted function name and arguments into single data as an L2 frame and the payload thereof which are transmittable by NIC 111. Note that the data format will be described later with reference to FIG. 3.

ACC-NIC common data creation part 133 receives, as an input, the "function name and arguments" from ACC function proxy reception part 132. ACC-NIC common data creation part 133 passes, as an output, "transmission data" to polling data transmission & data acquisition part 134.

Here, the data format may be not only the L2 frame but also data to which L3 and L4 headers are added. In addition, the L3 and L4 headers may be of Transmission Control Protocol/Internet Protocol (TCP/IP), or may be of one other than TCP/IP, an example of which is such that a part of L3/L4 is partially omitted and only L3 is used.

The packet format may include not only the function name and arguments but also an ID that can uniquely identify the accelerator to be utilized.

FIG. 3 is a data structure diagram of an accelerator function argument data packet 350, which shows an example of output data of ACC-NIC common data creation part 133. This accelerator function argument data packet 350 is also used as input data to the ACC-NIC common data parsing part 232 of server 200 described later.

In the present embodiment, the data formats of NICs 111 and 211 and accelerator 212 are made common, and data on the memory, which is received in a distributed manner as packets, is transferred to accelerator 212 as is. In view of this, the data structure is made common. Specifically, the data structure to be created by ACC-NIC common data creation part 133 is of the accelerator function argument data packet 350 illustrated in FIG. 3, and the data structure to be used in the collective transfer of distributed data ACC collective transfer instruction part 234 of server 200 described later is of the accelerator function return value packet 360 illustrated in FIG. 4 described later. Thus, the data structures of the accelerator function argument data packet 350 (FIG. 3) and the accelerator function return value packet 360 (FIG. 4) are the same.

By making the data formats of NICs 111 and 211 and accelerator 212 common, the data received by NIC 211 is in a format that can be read by an ACC function proxy execution part 233 as is.

As illustrated in FIG. 3, the accelerator function argument data packet 350 includes an L2 frame 351 (0 to byte 14), a function ID 352 (up to byte 34), a last data bit 353 (up to byte 42), a successive data address storage area 354 (up to byte 46), an argument <1> 355 (up to byte 50), and an argument <2> 356 (up to byte 54). The actual data of the accelerator function argument data packet 350 is the successive data address storage area 354, the argument <1> 355, and the argument <2> 356, excluding the L2 frame 351, the function ID 352, and the last data bit 353.

The successive data address storage area 354 is an example of an area in which accelerator 212 records the address of the successive data. The successive data address storage area 354 may be not included in the frame to be transmitted and received and may be secured in an area to be stored after reception.

Note that the accelerator function argument data packet 350 has a data structure suitable for parsing by the circuit of an FPGA by setting each piece of data to a fixed length and a fixed position. Note that the packet format illustrated in FIG. 3 may include not only the function name and arguments but also an ID capable of uniquely identifying the accelerator to be utilized.

### <Polling Data Transmission & Data Acquisition Part 134>

Polling data transmission & data acquisition part 134 interacts with NIC 111 to transmit/receive data to/from NIC 111. The transmission and reception are performed through a continuous access by polling in a busy loop without using an interrupt. Moreover, in order to eliminate the intervention of the kernel, the transmission and reception are executed as a userland program.

Polling data transmission & data acquisition part 134 receives, as a transmission pattern input, the "transmission data" from ACC-NIC common data creation part 133. Polling data transmission & data acquisition part 134 passes, as a transmission pattern output, the "transmission data" to NIC 111.

Polling data transmission & data acquisition part 134 receives, as a reception pattern input, the "reception packet" from NIC 111. Polling data transmission & data acquisition part 134 passes, as a reception pattern output, the "reception packet" to function & argument data parsing part 135.

Here, the main body of the polling in the busy loop may be an entity that is executed in the kernel space.

### <Function & Argument Data Parsing Part 135>

Function & argument data parsing part 135 deserializes the packet data inputted from the server 200 side according to the format of a predetermined protocol to acquire the function name and execution result.

Function & argument data parsing part 135 acquires the "function name and execution result" from the input data by deserializing the inputted packet data and passes the acquired "function name and execution result" to ACC function proxy response part 136.

### <ACC Function Proxy Response Part 136>

ACC function proxy response part 136 is implemented as middleware having an IF compatible with the prescribed API. ACC function proxy response part 136 is prepared as a binary file separate from user application part 131 and is implemented in a "dynamic library format", in which dynamic linking and calls are performed at runtime.

ACC function proxy response part 136 receives, as an input, the "function name and execution result" from function & argument data parsing part 135. ACC function proxy response part 136 passes, as an output, a "return value" to user application part 131.

ACC function proxy response part 136 may be in a "static library format", in which linking to user application part 131 is performed at the time of program generation and the execution is performed in a form integrated with user application part 131.

### [Server 200]

Server 200 includes server HW 210, an OS 220, and a userland APL 230.

### <<Server HW 210>>

Server HW 210 includes NIC 211 and accelerator 212.

### <NIC 211>

NIC 211 is NIC hardware that implements an NW interface.

In <Transmission Pattern>, NIC 211 receives, as an input, a "transmission packet" from a response data transmission part 236. In <Transmission Pattern>, NIC 211 passes, as an output, the "transmission packet" to NIC 111 of client 100 connected thereto via NW 1.

In <Reception Pattern>, NIC 211 receives, as an input, a "reception packet" from NIC 111 of client 100 connected thereto via NW 1. In <Reception Pattern>, NIC 211 passes, as an output, the "reception packet" to a polling data acquisition & ACC offload successive instruction part 231 via a not-illustrated NIC driver.

### <Accelerator 212>

Accelerator 212 is computing unit hardware that performs a specific arithmetic operation at high speed based on an input from the CPU. Accelerator 212 corresponds to a GPU/FPGA connected to server 200.

Accelerator 212 takes a form in which Scatter-Gather DMA is implemented to be able to collectively transfer data distributed on the host memory.

In <Transmission Pattern>, accelerator 212 receives, as an input, "ACC instruction data" from distributed data ACC collective transfer instruction part 234. In <Transmission Pattern>, accelerator 212 passes, as an output, an "execution result" to an ACC function & return value data acquisition part 235.

Accelerator 212 may be one such that a CPU and an accelerator are integrated as one chip, such as a system on chip (SoC).

Note that, in a case where accelerator 212 is not installed, ACC function proxy execution part 233 may be not provided.

### «Userland APL 230»

As illustrated in FIG. 1, userland APL 230 includes polling data acquisition & ACC offload successive instruction part (hereinafter, referred to as ACC offload successive instruction part) 231, ACC-NIC common data parsing part 232, ACC function proxy execution part 233, distributed data ACC collective transfer instruction part 234, ACC function & return value data acquisition part 235, and response data transmission part 236 (see also FIG. 2).

### <ACC Offload Successive Instruction Part 231>

ACC offload successive instruction part 231 performs a data arrival check on NIC 211 of server HW 210 by polling in a busy loop, and when data has arrived, performs reception processing and instructs ACC-NIC common data parsing part 232 to, in succession to the processing, successively perform parsing of the ACC offload processing.

ACC offload successive instruction part 231 receives, as an input, the "reception packet" from NIC 111, which is the access destination. Note that the input is confirmed by detection by ACC offload successive instruction part 231 via polling to NIC 111. ACC offload successive instruction part 231 instructs, as an output, ACC-NIC common data parsing part 232 to parse the ACC execution data.

Here, the data format conforms to ACC-NIC common data creation part 133.

Note that the method of detecting a packet arrival may be by detection with an interrupt instead of polling.

### <ACC-NIC Common Data Parsing Part 232>

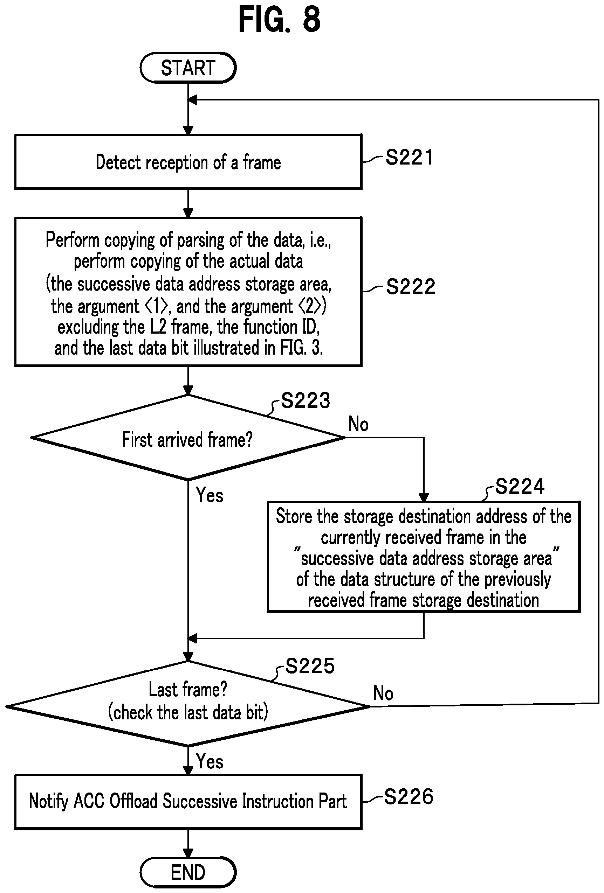

ACC-NIC common data parsing part 232 parses the reception data, in which the input data format of the ACC utilizing function and the NIC reception data format are made common. Specifically, ACC-NIC common data parsing part 232 parses the data received from ACC offload successive instruction part 231 and detects whether the data is the last frame of the function execution data divided into a plurality of pieces. In this context, the data format conforms to ACC-NIC common data creation part 133, and the latter half of the data structure is usable for ACC offloading by ACC function proxy execution part 233 and distributed data ACC collective transfer instruction part 234 without conversion. Note that this sequence and conditional branching will be described later with reference to the flow illustrated in FIG. 8.

Here, whether the data is the last one of the divided pieces of data is determined by referring a specific bit in the data (see the last data bit in FIG. 3). When reception of the last data is detected, ACC function proxy execution part 233 is called with an argument of a list of plurality of received unconcatenated data areas. For example, in the case of a second or subsequent reception when receiving a frame, the relationship between the frames is recorded by storing the address of the latest reception frame in the "successive data address storage area" (FIG. 3) of the previous reception data storage destination.

Note that the data format conforms to ACC-NIC common data creation part 133.

### <ACC Function Proxy Execution part 233>

ACC function proxy execution part 233 extracts data content to be transferred to the ACC excluding the function ID, the last bit, and the like based on the inputted plurality of unconcatenated accelerator execution data and places an instruction to distributed data ACC collective transfer instruction part 234. This series of processing is performed with only referencing the unconcatenated data without copy processing.

In <Execution Time Pattern>, ACC function proxy execution part 233 receives, as an input, a list of accelerator function execution data from ACC-NIC common data parsing part 232. In <Execution Time Pattern>, ACC function proxy execution part 233 passes, as an output, of the accelerator function execution data, a list of data to be transferred to accelerator 212 to distributed data ACC collective transfer instruction part 234.

In <Result Response Time Pattern>, ACC function proxy execution part 233 receives, as an input, the "execution result" from ACC function & return value data acquisition part 235 (see the dashed line between ACC function proxy execution part 233 and ACC function & return value data acquisition part 235 in FIG. 1). In <Result Response Time Pattern>, ACC function proxy execution part 233 passes, as an output, a "function name and function execution result" to response data transmission part 236 (see the dashed line between ACC function proxy execution part 233 and response data transmission part 236 in FIG. 1). That is, in <Result Response Time Pattern>, ACC function proxy execution part 233 calls ACC function & return value data acquisition part 235 as a function, and passes the "function name and function execution result" of the function to response data transmission part 236. Thus, the "execution result" of ACC function & return value data acquisition part 235 is once returned to ACC function proxy execution part 233. Instead of this mode, a configuration in which ACC function & return value data acquisition part 235 directly passes the "function name and function execution result" to response data transmission part 236 is possible (see the solid line between ACC function & return value data acquisition part 235 and response data transmission part 236 in FIG. 1).

### <Distributed Data ACC Collective Transfer Instruction Part 234>

Distributed data ACC collective transfer instruction part 234 instructs accelerator 212 to collectively transfer the data received in a distributed manner as packets by ACC-NIC common data parsing part 232 as is to accelerator 212 in the state of being distributed on the memory of the userland. Specifically, based on the inputted list of plurality of unconcatenated data areas, distributed data ACC collective transfer instruction part 234 instructs a distributed data transfer function (Scatter-Gather DMA) of accelerator 212 to collectively transfer the plurality of areas to accelerator 212 without performing data concatenation.

Distributed data ACC collective transfer instruction part 234 receives, as an input, a list of transfer target data from ACC function proxy execution part 233 and directs a data transfer to accelerator 212.

### <ACC Function & Return Value Data Acquisition Part 235>

ACC function & return value data acquisition part 235 monitors the completion of the arithmetic operation in accelerator 212 by polling in a busy loop and when the completion is detected, acquires the execution result of the accelerator and parameters indicating the state of the result (success, failure or the like of the execution).

ACC function & return value data acquisition part 235 monitors accelerator 212 by polling in a busy loop and detects the completion of the processing. Here, when the completion is detected, ACC function & return value data acquisition part 235 acquires the arithmetic operation result of the accelerator in succession to the monitoring. ACC function & return value data acquisition part 235 responds, as an output, to ACC function proxy execution part 233 with the acquired execution result (return value).

Note that, in the case of the present embodiment, ACC function & return value data acquisition part 235 first responds to ACC function proxy execution part 233 with the acquired execution result (return value) in response to a function call from ACC function proxy execution part 233, and then ACC function proxy execution part 233 transmits the "function name and execution result" to response data transmission part 236. Instead of this mode, a mode in which ACC function & return value data acquisition part 235 passes the "function name and execution result" of accelerator 212 to response data transmission part 236 is possible (see the solid line between ACC function & return value data acquisition part 235 and response data transmission part 236 in FIG. 1).

### <Response Data Transmission Part 236>

Response data transmission part 236 creates response data based on the inputted function name and execution result, and instructs NIC 111 to transmit the response data.

Response data transmission part 236 receives, as an input, the "function name and arguments (storing the execution result as an argument(s))" from ACC function & return value data acquisition part 235. Response data transmission part 236 passes, as an output, the execution result data to NIC 111. The data format at this time takes the format illustrated in FIG. 4 described later.

Note that, in a case where the size of the response data is large, it is also possible to have a data dividing and transmitting function.

FIG. 4 is a data structure diagram of the accelerator function return value packet 360.

The accelerator function return value packet 360 is in the data format according to which response data transmission part 236 passes, as an output, the execution result data to NIC 111.

As described above, in the case of the present embodiment, the data formats of NICs 111 and 211 and accelerator 212 are made common and the data on the memory, which is received in a distributed manner as packets, is transferred to accelerator 212 as is.

The accelerator function return value packet 360 includes an L2 frame 361 (0 to byte 14), a function ID 362 (up to byte 34), a last data bit 363 (up to byte 42), a successive data address storage area 364 (up to byte 46), an argument <1> 365 (up to byte 50), and an argument <2> 366 (up to byte 54). Note that the execution result is stored as an argument(s). The actual data of the accelerator function return value packet 360 is the successive data address storage area 364, the argument <1> 365, and the argument <2> 366 excluding the L2 frame 361, the function ID 362, and the last data bit 363.

The successive data address storage area 364 is an example of an area in which accelerator 212 records the address of the successive data.

Hereinafter, an operation of arithmetic processing offload system 1000 configured as described above will be described.

### [Outline of Operation of Arithmetic Processing Offload System 1000]

An offload processing flow of arithmetic processing offload system 1000 will be described with reference to FIG. 2. The same components as those in FIG. 1 are denoted by the same reference signs.

The solid arrows in FIG. 2 indicate an offload outward path, and the dashed arrows in FIG. 2 indicate an offload return path.

### Offload Outward Path

As illustrated in FIG. 2, ACC function proxy reception part 132 of userland APL 130 of client 100 receives, as an input, a "function name and arguments" from user application part 131 (see reference sign aa in FIG. 2). ACC function proxy reception part 132 of client 100 passes, as an output, the "function name and arguments" to ACC-NIC common data creation part 133 (see reference sign bb in FIG. 2).

ACC-NIC common data creation part 133 receives, as an input, the "function name and arguments" from ACC function proxy reception part 132. ACC-NIC common data creation part 133 converts the inputted function name and arguments into single data as an L2 frame and the payload thereof which are transmittable by the NIC. ACC-NIC common data creation part 133 passes, as an output, "transmission data" to polling data transmission & data acquisition part 134 (see reference sign cc in FIG. 2).

The polling data transmission & data acquisition part 134 receives, as a transmission pattern input, the "transmission data" from ACC-NIC common data creation part 133. Polling data transmission & data acquisition part 134 interacts with NIC 111 to transmit/receive data to/from NIC 111. Polling data transmission & data acquisition part 134 passes, as a transmission pattern output, the "transmission data" to NIC 111 (see reference sign dd in FIG. 2).

In <Transmission Pattern>, NIC 111 receives, as an input, a "transmission packet" from polling data transmission & data acquisition part 134 via a not-illustrated NIC driver. In <Transmission Pattern>, NIC 111 passes, as an output, the "transmission packet" to NIC 211 of server HW 210 connected thereto via NW 1.

In <Reception Pattern>, NIC 211 of server HW 210 receives, as an input, a "reception packet" from NIC 111 of client 100 connected thereto via NW 1. In <Reception Pattern>, NIC 211 passes, as an output, the "reception packet" to ACC offload successive instruction part 231 via a not-illustrated NIC driver.

ACC offload successive instruction part 231 performs data arrival check on NIC 211 of server HW 210 by polling in a busy loop (see reference sign ee in FIG. 2) and when data has arrived, performs reception processing and instructs ACC-NIC common data parsing part 232 to, in succession to the processing, successively perform parsing of the ACC offload processing (see reference sign ff in FIG. 2).

ACC-NIC common data parsing part 232 parses the data received from ACC offload successive instruction part 231 and detects whether the data is the last frame of the function execution data divided into a plurality of pieces. When reception of the last data is detected, ACC-NIC common data parsing part 232 calls ACC function proxy execution part 233 with an argument of a list of plurality of received unconcatenated data areas (see reference sign gg in FIG. 2).

In <Execution Time Pattern>, ACC function proxy execution part 233 receives, as an input, a list of accelerator function execution data from ACC-NIC common data parsing part 232. ACC function proxy execution part 233 extracts data content to be transferred to the ACC excluding the function ID, the last bit, and the like based on the inputted plurality of unconcatenated accelerator execution data, and places an instruction to distributed data ACC collective transfer instruction part 234. This series of processing is performed with only referencing the unconcatenated data without copy processing. In <Execution Time Pattern>, ACC function proxy execution part 233 passes, as an output, of the accelerator function execution data, a list of data to be transferred to accelerator 212 to distributed data ACC collective transfer instruction part 234 (see reference sign hh in FIG. 2).

Distributed data ACC collective transfer instruction part 234 receives, as an input, a list of transfer target data from ACC function proxy execution part 233. Based on the inputted list of plurality of unconcatenated data areas, distributed data ACC collective transfer instruction part 234 instructs the distributed data transfer function (Scatter-Gather DMA) of accelerator 212 to collectively transfer the plurality of areas to accelerator 212 without performing data concatenation (see reference sign ii in FIG. 2). This ACC collective transfer access to accelerator 212 is performed at high speed using polling (see elliptical enclosure in FIG. 2).

### Offload Return Path

In <Transmission Pattern>, accelerator 212 receives, as an input, "ACC instruction data" from distributed data ACC collective transfer instruction part 234. In <Transmission Pattern>, accelerator 212 passes, as an output, an "execution result" to ACC function & return value data acquisition part 235 (see reference sign jj in FIG. 2).

In response to a function call from ACC function proxy execution part 233, ACC function & return value data acquisition part 235 responds to ACC function proxy execution part 233 with the execution result (return value) acquired from accelerator 212 (see reference sign kk in FIG. 2).

In <Result Response Time Pattern>, ACC function proxy execution part 233 transmits, as an output, a "function name and function execution result" to response data transmission part 236 (see reference sign ll in FIG. 2).

Response data transmission part 236 receives, as an input, the "function name and arguments" from ACC function proxy execution part 233. Response data transmission part 236 converts the inputted function name and function execution result into data as a UDP/IP packet and the payload thereof. Response data transmission part 236 passes, as an output, a "transmission packet" to NIC 211 of server HW 210 (see reference sign mm in FIG. 2). NIC 211 passes the "transmission packet" to NIC 111 of client HW 110 connected thereto via NW 1.

NIC 111 of client 100 receives the packet from NIC 211 of server HW 210 and passes the packet to polling data transmission & data acquisition part 134 (see reference sign nn in FIG. 2).

Polling data transmission & data acquisition part 134 receives, as a reception pattern input, the "reception packet" from NIC 111 and passes, as a reception pattern output, the "reception packet" to function & argument data parsing part 135 (see reference sign oo in FIG. 2).

Function & argument data parsing part 135 deserializes the "reception packet" inputted from the server 200 side according to the format of a predetermined protocol to acquire the function name and execution result and passes the function name and execution result to ACC function proxy response part 136 (see reference sign pp in FIG. 2).

ACC function proxy response part 136 receives, as an input, the "function name and execution result" from function & argument data parsing part 135. ACC function proxy response part 136 passes, as an output, a "return value" to user application part 131 (see reference sign qq in FIG. 2).

User application part 131 receives the function execution result from ACC function proxy response part 136.

### [Offload Processing of Arithmetic Processing Offload System 1000]

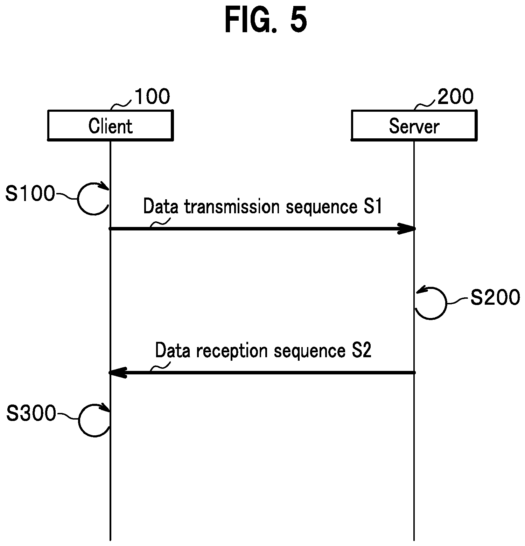

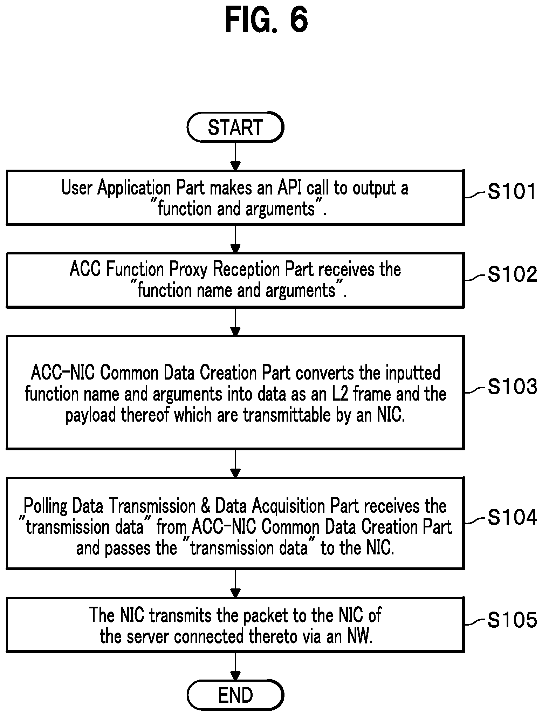

Next, the offload processing of arithmetic processing offload system 1000 will be described with reference to the control sequence illustrated in FIG. 5 and the flowcharts illustrated in FIGS. 6 to 8 and 10.

### <Control Sequence>

FIG. 5 is the control sequence showing the offload processing of arithmetic processing offload system 1000 illustrated in FIGS. 1 and 2.

As illustrated in FIG. 5, client 100 (see FIGS. 1 and 2) performs transmission-time offload processing (see S100 and FIG. 6) and transmits data of the processing result to server 200 (see FIGS. 1 and 2) via NW 1 (see FIGS. 1 and 2) (see data transmission sequence S1).

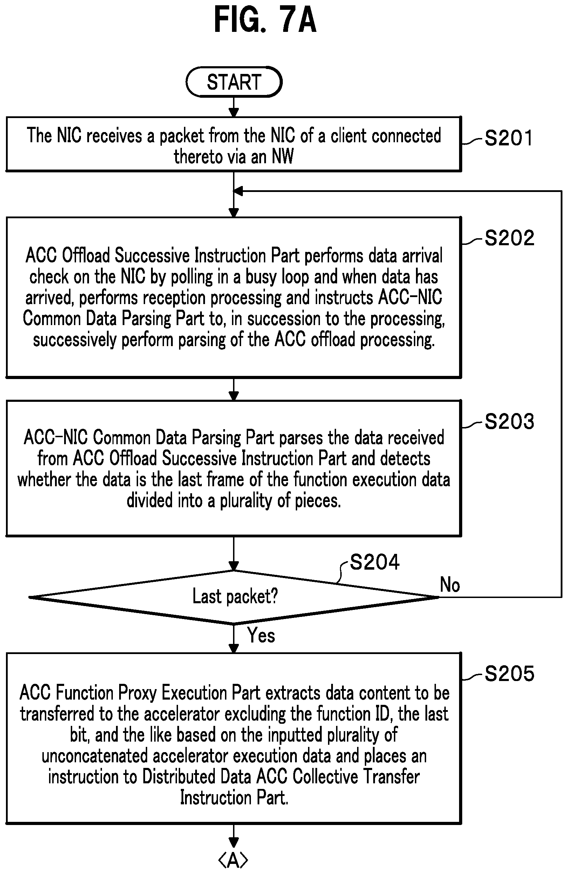

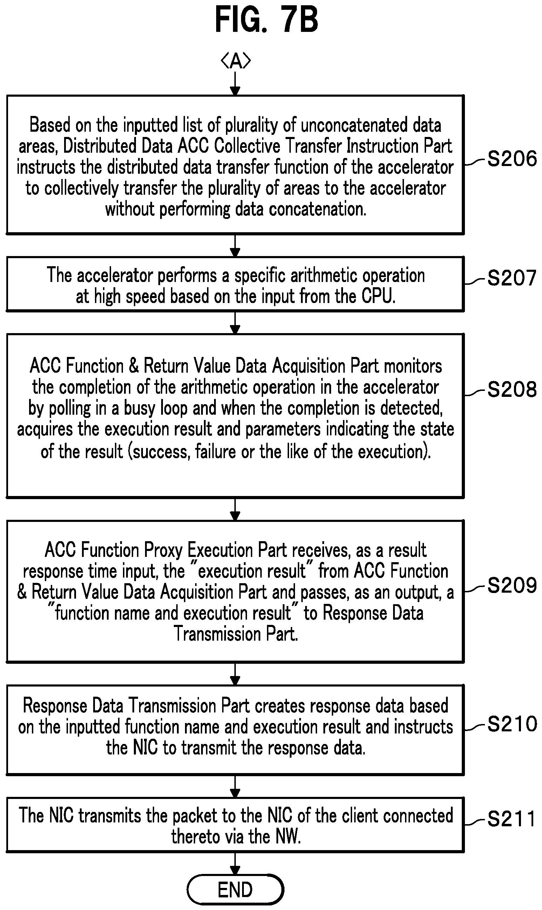

Server 200 receives the data transmitted from client 100 via NW 1 and performs server-side offload processing (see S200, FIGS. 7A and 7B and FIG. 8).

Server 200 transmits the data of the ACC function processing result to client 100 via NW 1 (see data transmission sequence S2).

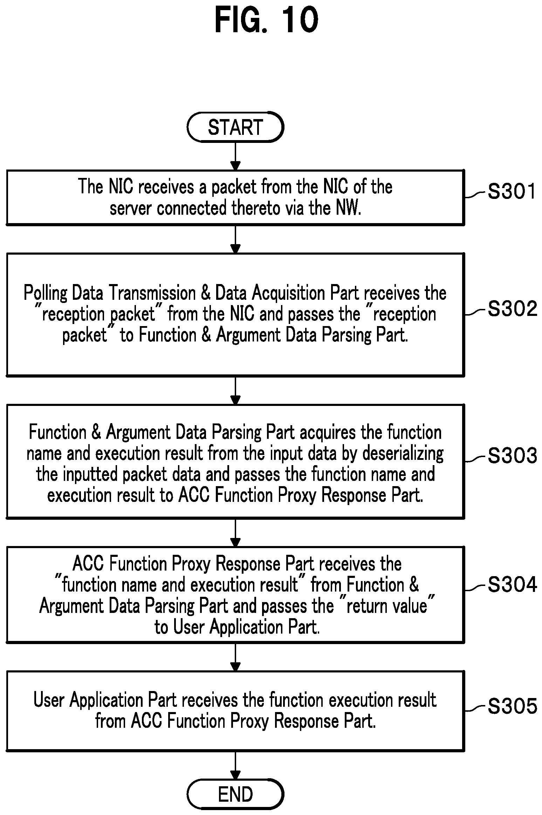

Client 100 performs reception-time offload processing (see S300 and FIG. 10).

### <Transmission-Time Offload Processing by Client 100>

FIG. 6 is a flowchart illustrating the transmission-time offload processing (processing of S100 in FIG. 5) by client 100 of arithmetic processing offload system 1000 illustrated in FIGS. 1 and 2.

In step S101, user application part 131 of userland APL 130 makes an API call to output a "function name and arguments".

In step S102, ACC function proxy reception part 132 of userland APL 130 receives the "function name and arguments" from user application part 131, and passes the "function name and arguments" to ACC-NIC common data creation part 133.

In step S103, ACC-NIC common data creation part 133 of userland APL 130 converts the inputted function name and arguments into data as an L2 frame and the payload thereof which are transmittable by the NIC. Specifically, ACC-NIC common data creation part 133 converts the inputted function name and plural arguments into single data by serializing them according to the format of a predetermined protocol and packetizing them as the payload.

In step S104, polling data transmission & data acquisition part 134 of userland APL 130 receives, as a transmission pattern input, the "transmission data" from ACC-NIC common data creation part 133 and passes, as a transmission pattern output, the "transmission data" to NIC 111 of client HW 110.

In step S105, NIC 111 transmits the packet to server HW 210 connected thereto via NW 1.

### <Offload Processing of Server 200>

FIGS. 7A and 7B are flowcharts illustrating the offload processing (processing of S200 in FIG. 5) of server 200 of arithmetic processing offload system 1000 in FIGS. 1 and 2.

In step S201, in <Reception Pattern>, NIC 211 of server HW 210 receives, as an input, the packet from NIC 111 of client 100 connected thereto via NW 1.

In step S202, ACC offload successive instruction part 231 of userland APL 230 performs data arrival check on NIC 211 of server HW 210 by polling in a busy loop and when data has arrived, performs reception processing. Then, ACC offload successive instruction part 231 instructs ACC-NIC common data parsing part 232 to, in succession to the processing, successively perform parsing of the ACC offload processing.

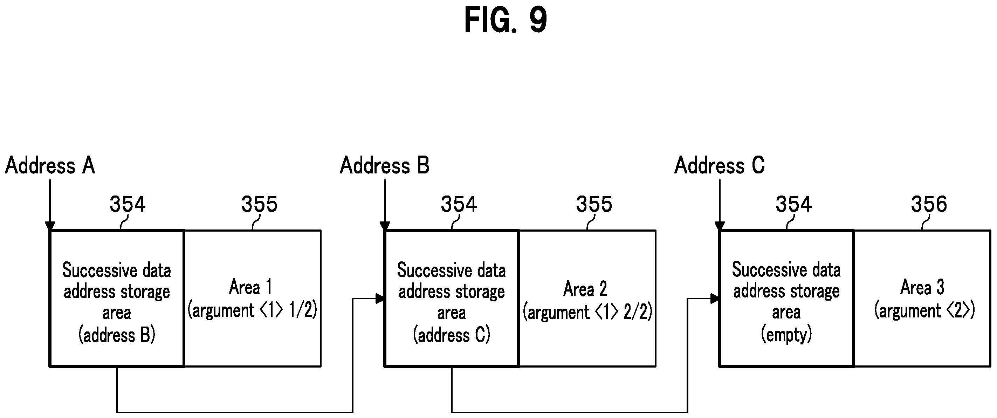

In step S203, ACC-NIC common data parsing part 232 of userland APL 230 parses the data received from ACC offload successive instruction part 231 and detects whether the data is the last frame of the function execution data divided into a plurality of pieces. The detailed processing of ACC-NIC common data parsing part 232 will be described later with reference to the processing flow illustrated in FIG. 8 and the data structure diagram illustrated in FIG. 9.

In step S204, ACC-NIC common data parsing part 232 determines whether the arrived packet is the last packet. When the arrived packet is not the last packet (S204: No), the process returns to step S202.

When, in step S204 described above, the arrived packet is the last packet (S204:Yes), in step S205, ACC function proxy execution part 233 of userland APL 230 extracts data content to be transferred to the ACC excluding the function ID, the last bit, and the like based on the inputted plurality of unconcatenated accelerator execution data and places an instruction to distributed data ACC collective transfer instruction part 234.

In step S206, based on the inputted list of plurality of unconcatenated data areas, distributed data ACC collective transfer instruction part 234 of userland APL 230 instructs the distributed data transfer function (Scatter-Gather DMA) of accelerator 212 to collectively transfer the plurality of areas to accelerator 212 without performing data concatenation.

In step S207, accelerator 212 of server HW 210 performs a specific arithmetic operation at high speed based on the input from the CPU. The accelerator 212 takes a form in which Scatter-Gather DMA is implemented to be able to collectively transfer data distributed on the host memory.

In step S208, ACC function & return value data acquisition part 235 of userland APL 230 monitors the completion of the arithmetic operation in accelerator 212 by polling in a busy loop and when the completion is detected, acquires the execution result of accelerator 212 and parameters indicating the state of the result (success, failure or the like of the execution).

In step S209, in <Result Response Time Pattern>, ACC function proxy execution part 233 of userland APL 230 receives, as an input, the "execution result" from ACC function & return value data acquisition part 235. In <Result Response Time Pattern>, ACC function proxy execution part 233 passes, as an output, a "function name and execution result" to response data transmission part 236.

In step S210, response data transmission part 236 of userland APL 230 creates response data based on the inputted function name and execution result and instructs NIC 111 of server HW 210 to transmit the response data.

In step S211, NIC 211 of server HW 210 transmits the packet to NIC 111 of client 100 connected thereto via NW 1.

FIG. 8 is a flowchart illustrating the parse processing of ACC-NIC common data parsing part 232. This is a detailed processing flow of ACC-NIC common data parsing part 232 in step S203 in FIG. 7.

In step S221, ACC-NIC common data parsing part 232 detects reception of a frame.

In step S222, ACC-NIC common data parsing part 232 performs copying of parsing of the data. Specifically, ACC-NIC common data parsing part 232 performs copying of the actual data (the successive data address storage area 354, the argument <1> 355, and the argument <2> 356) excluding the L2 frame 351, the function ID 352, and the last data bit 353 of the accelerator function argument data packet 350 illustrated in FIG. 3.

In step S223, ACC-NIC common data parsing part 232 determines whether the frame is the first arrived frame. In a case where the frame is the first arrived frame (step S223: Yes), the process proceeds to step S225.

When the frame is not the first arrived frame (S223: No), in step S224, ACC-NIC common data parsing part 232 stores the storage destination address of the currently received frame in "successive data address storage area" of the data structure of the previously received frame storage destination and proceeds to step S225 (see FIG. 9).

In step S225, ACC-NIC common data parsing part 232 determines whether the frame is the last frame by checking the last data bit (checking of the last frame will be described later with reference to FIG. 9). When the frame is not the last frame (S225: No), the process returns to step S221.

When the frame is the last frame (S225: Yes), in step S226, ACC-NIC common data parsing part 232 notifies ACC offload successive instruction part 231 and terminates the processing of the present flow.

FIG. 9 is a data structure diagram of data on a memory including successive data address storage areas of accelerator function argument data packets.

The example illustrated in FIG. 9 illustrates the actual data (successive data address storage area, argument <1>, and argument <2>) of three frames of the accelerator function argument data packet 350 illustrated in FIG. 3. In the left frame in FIG. 9, the successive data address storage area 354 is designated by address A, and the left frame includes a successive area 1 (here, 1/2 of the argument <1> 355). The successive data address storage area 354 is an area in which accelerator 212 records the address of the successive data and which, in this case, stores address B designating the successive data address storage area 354 of the next frame.

In the center frame in FIG. 9, the successive data address storage area 354 is designated by address B, and the center frame includes a successive area 1 (here, 2/2 of the argument <1> 355). The successive data address storage area 354 of the center frame in FIG. 9 stores address C designating the successive data address storage area 354 of the next frame.

In the right frame in FIG. 9, the successive data address storage area 354 is designated by address C, and the right frame includes a successive area 1 (here, 1/2 of the argument <2> 356). The successive data address storage area 354 of the right frame in FIG. 9 does not store an address designating the successive data address storage area 354 of a next frame as the right frame is the last frame (successive data address storage area: empty).

ACC-NIC common data parsing part 232 (FIGS. 1 and 2) determines whether a frame is the last frame by checking the last data bit (step S225 in FIG. 8).

In the case where the third frame is the last frame, ACC-NIC common data parsing part 232 stores the three frames in the memory with the data structure illustrated in FIG. 9.

Distributed data ACC collective transfer instruction part 234 (FIGS. 1 and 2) reads such an inter-frame data structure and performs a collective transfer to accelerator 212.

### <Reception-Time Offload Processing by Client 100>

FIG. 10 is a flowchart illustrating the reception-time offload processing (processing S300 in FIG. 5) by client 100 of arithmetic processing offload system 1000 in FIGS. 1 and 2.

In step S301, NIC 111 of client 100 receives a packet from NIC 211 of server HW 210 connected thereto via NW 1.

In step S302, polling data transmission & data acquisition part 134 of userland APL 130 receives a "reception packet" from NIC 111 and passes the "reception packet" to function & argument data parsing part 135.

In step S303, function & argument data parsing part 135 of userland APL 130 acquires the "function name and execution result" from the input data by deserializing the inputted packet data ("reception packet"), and passes the "function name and execution result" to ACC function proxy response part 136.

In step S304, ACC function proxy response part 136 of userland APL 130 receives the "function name and execution result" from function & argument data parsing part 135, and passes, as an output, the "return value" to user application part 131.

In step S305, user application part 131 of userland APL 130 receives the function execution result from ACC function proxy response part 136.

### [Modifications]

### <Modification 1>

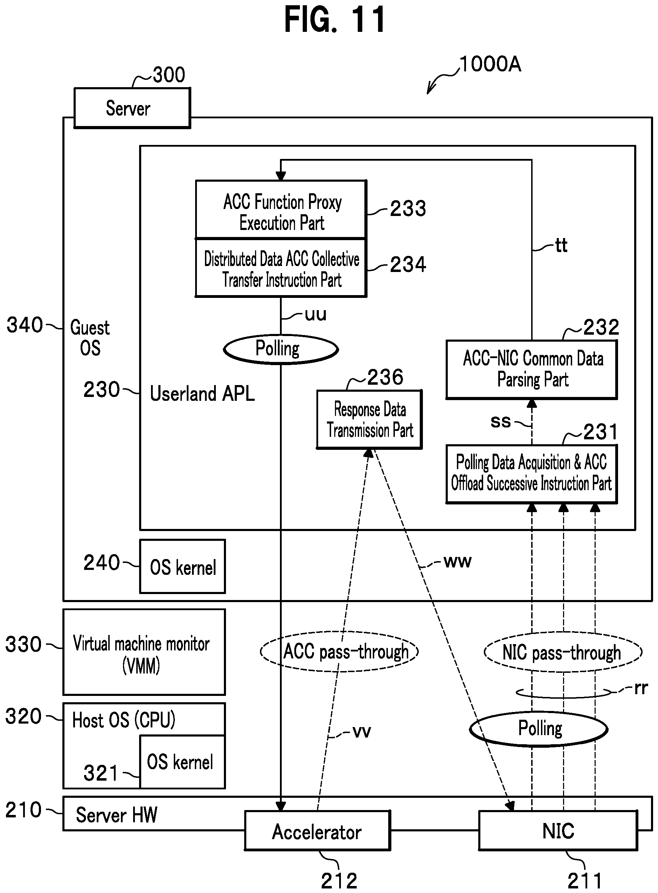

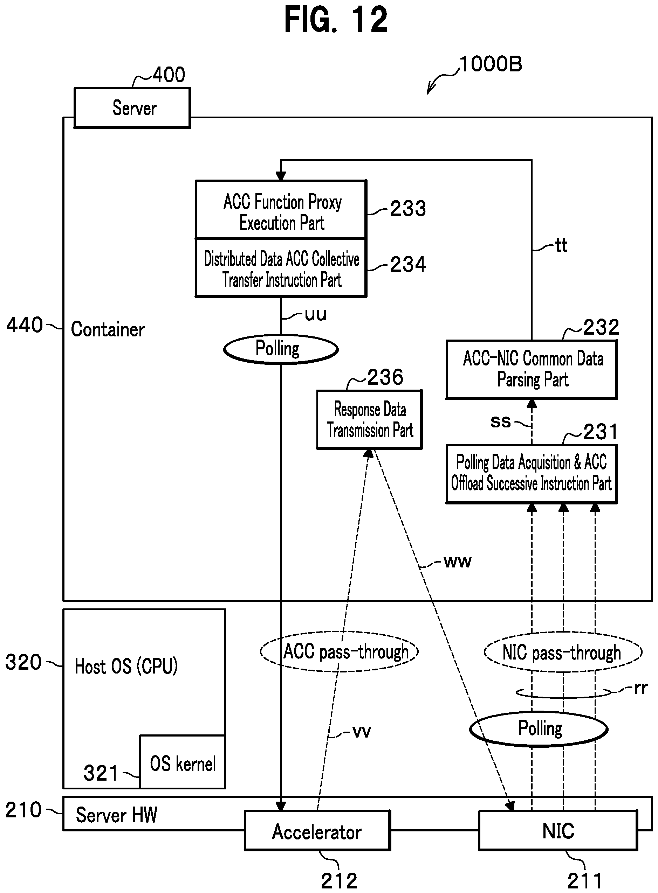

Arithmetic processing offload system 1000 illustrated in FIGS. 1 and 2 is of a bare-metal configuration without virtualization in the server-side application, but may take a container and virtual machine (VM) configuration with virtualization. Hereinafter, description will be given with reference to FIGS. 11 and 12.

FIG. 11 is a schematic configuration diagram of an arithmetic processing offload system according to <Modification 1> of the embodiment of the present invention. As there is no change in client 100 illustrated in FIGS. 1 and 2, illustration thereof is omitted, and only a server 300 is illustrated. The same components as those in FIGS. 1 and 2 are denoted by the same reference signs, and explanation of the overlapping portions is omitted.

As illustrated in FIG. 11, an arithmetic processing offload system 1000A according to <Modification 1> includes the server 300.

Server 300 includes server HW 210, a host OS 320 having an OS kernel 321, a virtual machine monitor (VMM) 330, and a guest OS 340.

Guest OS 340 includes userland APL 230 and an OS kernel 240. Userland APL 230 includes ACC offload successive instruction part 231, ACC-NIC common data parsing part 232, ACC function proxy execution part 233, distributed data ACC collective transfer instruction part 234, and response data transmission part 236.

Hereinafter, an operation of arithmetic processing offload system 1000A configured as described above is described.

### Offload Outward Path (Description on Server Side Only)

In <Reception Pattern>, NIC 211 of server HW 210 passes, as an output, a "reception packet" to ACC offload successive instruction part 231 (see reference sign rr in FIG. 11) by NIC pass-through (see the dashed elliptical enclosure in FIG. 11) via a not-illustrated NIC driver. ACC offload successive instruction part 231 and NIC 211 have a relationship in which a direct access to the actual NIC 211 is made via NIC pass-through. Note that there are two examples of the relationship between ACC offload successive instruction part 231 and NIC 211, wherein the other mode is such that the access is made via a virtual IF, such as virtio, which is prepared by a virtual machine.

ACC offload successive instruction part 231 performs data arrival check on NIC 211 of server HW 210 by polling in a busy loop, and when data has arrived, performs reception processing and instructs ACC-NIC common data parsing part 232 to, in succession to the processing, successively perform parsing of the ACC offload processing (see reference sign ss in FIG. 11).

ACC-NIC common data parsing part 232 parses the data received from ACC offload successive instruction part 231 and detects whether the data is the last frame of the function execution data divided into a plurality of pieces. When reception of the last data is detected, ACC-NIC common data parsing part 232 calls ACC function proxy execution part 233 with an argument of a list of plurality of received unconcatenated data areas (see reference sign tt in FIG. 11).

In <Execution Time Pattern>, ACC function proxy execution part 233 receives, as an input, a list of accelerator function execution data from ACC-NIC common data parsing part 232. ACC function proxy execution part 233 extracts data content to be transferred to the ACC excluding the function ID, the last bit, and the like based on the inputted plurality of unconcatenated accelerator execution data and places an instruction to distributed data ACC collective transfer instruction part 234. This series of processing is performed with only referencing the unconcatenated data without copy processing. In <Execution Time Pattern>, ACC function proxy execution part 233 passes, as an output, of the accelerator function execution data, a list of data to be transferred to accelerator 212 to distributed data ACC collective transfer instruction part 234.

Distributed data ACC collective transfer instruction part 234 receives, as an input, a list of transfer target data from ACC function proxy execution part 233. Based on the inputted list of plurality of unconcatenated data areas, distributed data ACC collective transfer instruction part 234 instructs the distributed data transfer function (Scatter-Gather DMA) of accelerator 212 to collectively transfer the plurality of areas to accelerator 212 without performing data concatenation (see reference sign uu in FIG. 11). This ACC collective transfer access to accelerator 212 is performed at high speed using polling (see the elliptical enclosure in FIG. 11).

### Offload Return Path (Description on Server Side Only)

In <Transmission Pattern>, accelerator 212 receives, as an input, "ACC instruction data" from distributed data ACC collective transfer instruction part 234. In <Transmission Pattern>, accelerator 212 passes, as an output, an "execution result" to response data transmission part 236 (see reference sign vv in FIG. 11) by ACC pass-through (see the dashed elliptical enclosure in FIG. 11). Response data transmission part 236 and NIC 211 have a relationship in which a direct access to the actual accelerator 212 is made via ACC pass-through.

Response data transmission part 236 converts the inputted function name and function execution result into data as a UDP/IP packet and the payload thereof. Response data transmission part 236 passes, as an output, the "transmission packet" to NIC 211 of server HW 210 (see reference sign ww in FIG. 11).

Arithmetic processing offload system 1000A according to <Modification 1> can be applied to a VM configuration with virtualization.

### <Modification 2>

FIG. 12 is a schematic configuration diagram of an arithmetic processing offload system according to <Modification 2> of the embodiment of the present invention. The same components as those in FIGS. 1, 2, and 11 are denoted by the same reference signs, and explanation of the overlapping portions is omitted.

As illustrated in FIG. 12, an arithmetic processing offload system 1000B according to <Modification 2> includes a server 400.

Server 400 includes server HW 210, host OS 320 having OS kernel 321, and a container 440.

Container 440 includes ACC offload successive instruction part 231, ACC-NIC common data parsing part 232, ACC function proxy execution part 233, distributed data ACC collective transfer instruction part 234, and response data transmission part 236.

As the operation of arithmetic processing offload system 1000B is similar to that of arithmetic processing offload system 1000A illustrated in FIG. 11, the same reference signs are given and the description thereof is omitted.

ACC offload successive instruction part 231 and NIC 211 have a relationship in which a direct access to the actual NIC 211 is made via NIC pass-through (see the dashed elliptical enclosure in FIG. 12). Note that there are two examples of the relationship between ACC offload successive instruction part 231 and NIC 211, wherein the other mode is such that the access is made via a virtual NIC, such as Linux bridge.

Arithmetic processing offload system 1000B according to <Modification 2> can be applied to a container with virtualization.

### <Modification 3>

The present embodiment is a mode in which a single client program performs offloading to a single server. However, the mode may be such that the offloading is performed in parallel.

Specifically, the following two patterns are conceivable.
1: A mode in which a plurality of client programs performs offloading to a single server in parallel
2: A mode in which a single program performs offloading to a single server in parallel

Here, as a mechanism for embodying the parallel execution, it is possible to implement a mode in which a multiple sets of ACC offload successive instruction part 231, ACC-NIC common data parsing part 232, ACC function proxy execution part 233, distributed data ACC collective transfer instruction part 234, ACC function & return value data acquisition part 235, and response data transmission part 236 are concurrently executed on the server side.

### [Hardware Configuration]

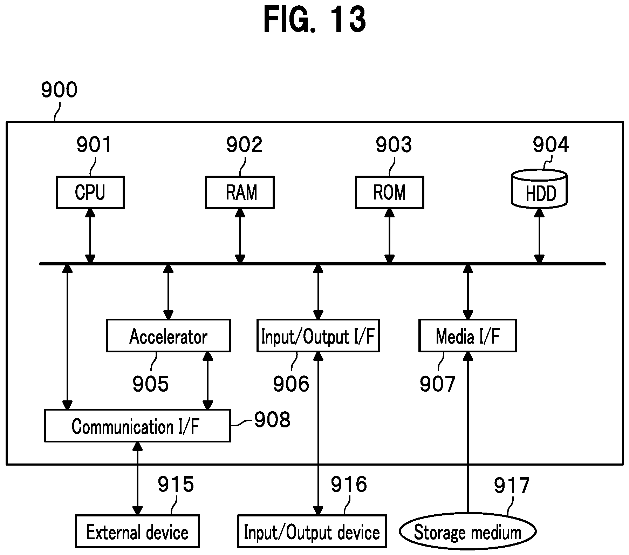

Server 200 of arithmetic processing offload system 1000 according to the present embodiment described above is implemented using, for example, a computer 900 having the configuration illustrated in FIG. 13.

FIG. 13 is a hardware configuration diagram illustrating an example of computer 900 that implements the functions of server 200.

Server 200 includes a CPU 901, a RAM 902, a ROM 903, an HDD 904, an accelerator 905, an input/output interface (I/F) 906, a media interface (I/F) 907, and a communication interface (I/F: Interface) 908. Accelerator 905 corresponds to accelerator 212 in FIGS. 1 and 2.

Accelerator 905 is accelerator (device) 212 (FIGS. 1 and 2) that processes at least either the data from communication I/F 908 or the data from RAM 902 at high speed. Note that, as accelerator 905, an accelerator of a type (look-aside type) that executes processing from CPU 901 or RAM 902 and then returns the execution result to CPU 901 or RAM 902 may be used. Alternatively, as accelerator 905, an accelerator of a type (in-line type) that is interposed between communication I/F 908 and CPU 901 or RAM 902 and performs processing may also be used.

Accelerator 905 is connected to an external device 915 via communication I/F 908. Input/output I/F 906 is connected to an input/output device 916. Media I/F 907 reads and writes data from and to a recording medium 917.

CPU 901 operates according to a program stored in ROM 903 or HDD 904 and controls each component of server 200 illustrated in FIGS. 1 and 2 by executing the program (also called as an application or an App as an abbreviation thereof) read into RAM 902. The program can be provided via a communication line or recorded in recording medium 917, such as a CD-ROM, to be provided.

ROM 903 stores a boot program to be executed by CPU 901 at the time of activating computer 900, a program depending on the hardware of computer 900, and the like.

CPU 901 controls input/output device 916 including an input part such as a mouse or a keyboard and an output part such as a display or a printer via input/output I/F 906. CPU 901 retrieves data from input/output device 916 and outputs generated data to input/output device 916 via input/output I/F 906. Note that a graphics processing unit (GPU) or the like may be used as a processor in conjunction with CPU 901.

HDD 904 stores a program to be executed by CPU 901, data to be used by the program, and the like. Communication I/F 908 receives data from another device via a communication network (e.g., network (NW)), outputs the data to CPU 901, and transmits data generated by CPU 901 to another device via the communication network.

Media I/F 907 reads a program or data stored in recording medium 917, and outputs the program or data to CPU 901 via RAM 902. CPU 901 loads a program related to target processing from recording medium 917 onto RAM 902 via media I/F 907, and executes the loaded program. Recording medium 917 is an optical recording medium such as a digital versatile disc (DVD) or a phase change rewritable disk (PD), a magneto-optical recording medium such as a magneto optical disk (MO), a magnetic recording medium, a conductor memory tape medium, a semiconductor memory, or the like.

For example, in a case where computer 900 functions as server 200 configured as a device according to the present embodiment, CPU 901 of computer 900 embodies the functions of server 200 by executing a program loaded on RAM 902. HDD 904 stores data in RAM 902. CPU 901 reads the program related to the target processing from recording medium 917, and executes the program. In addition to this, CPU 901 may read a program related to the target processing from another device via the communication network.

### [Effects]

As described above, provided is an arithmetic processing offload system 1000 (FIGS. 1 and 2) including a client 100 and a server 200 connected thereto via a network 1 and an NIC 212, wherein client 100 is configured to offload specific processing of an application to an accelerator 212 installed in server 200 in order to perform arithmetic processing. Server 200 includes a userland APL 230 configured to cooperate with accelerator 212 while bypassing an OS 220. Userland APL 230 includes an ACC-NIC common data parsing part 232 configured to parse reception data in which an input data format of an ACC utilizing function and a NIC reception data format are made common.

As described, the input data format of the ACC utilizing function and the NIC reception data format are made common so that there is no mutual conversion overhead.

With this, it is possible to reduce the data concatenation and conversion processing in the event of the server offloading the reception data received in a distributed manner to accelerator 212 to achieve low latency by the reduction of the data concatenation and conversion processing.

This embodies a remote offload method that achieves both the transparency not requiring changes to the application utilizing accelerator 212 and the real-time performance.

Arithmetic processing offload system 1000 (FIGS. 1 and 2) includes a distributed data ACC collective transfer instruction part 234 configured to instruct accelerator 212 to collectively transfer the data received in a distributed manner as packets by ACC-NIC common data parsing part 232 as is to accelerator 212 in a state of being distributed on the memory of the userland.

With this, by collectively transferring the data received in a distributed manner to the ACC device as is in a state of being distributed on the memory, zero-copy is achieved in the NIC reception-ACC data transfer, eliminating the data concatenation overhead.

The memory area to be accessed is arranged only in userland APL 230, and interrupts between the userland APL and the OS and interrupts in the cooperation with the device (ACC/NIC) are reduced. By this reduction of the interrupts, low latency is achieved.

In arithmetic processing offload system 1000 (FIGS. 1 and 2), distributed data ACC collective transfer instruction part 234 is configured to, based on an inputted list of a plurality of unconcatenated data areas, instruct a distributed data transfer function (Scatter-Gather DMA) of accelerator 212 to collectively transfer the plurality of areas to accelerator 212 without performing data concatenation.

With this, by collectively transferring the data received in a distributed manner to the ACC device as is in a state of being distributed on the memory, zero-copy is achieved in the NIC reception-ACC data transfer, reducing the data concatenation overhead.

Arithmetic processing offload system 1000 (FIGS. 1 and 2) includes an ACC offload successive instruction part 231 configured to perform data arrival check on NIC 211 of server HW 210 by polling in a busy loop and when data has arrived, perform reception processing and instruct ACC-NIC common data parsing part 232 to, in succession to the processing, successively perform parsing of ACC offload processing.

In this manner, ACC offload successive instruction part 231 performs an ACC/NIC access by busy polling and detects data arrival detection/transmission without interrupts. Further, after the detection, ACC offload successive instruction part 231 executes the ACC offload function in the same context and the same CPU core. Here, the processing in the same context means that the processing is completed by the same single CPU core on the CPU without another processing intervening by an interrupt.

As a result, a series of processing up to the packet processing and ACC offloading are successively performed by a single CPU core, achieving low jitter.

Of each of the types of processing described in the above embodiments and modifications, all or a part of the processing described as being automatically performed can be manually performed, or all or a part of the processing described as being manually performed can be automatically performed by a known method. In addition, processing procedures, control procedures, specific name, and information including various types of data and parameters illustrated in the specification and the drawings can be freely changed unless otherwise specified.

In addition, each component of each device that has been illustrated is functionally conceptual, and is not necessarily physically configured as illustrated. In other words, the specific form of distribution and integration of each device is not limited to the illustrated form, and all or part of the configuration can be functionally or physically distributed and integrated in any part according to various loads, usage conditions, and the like.

Further, a part or all of the configurations, functions, processing parts, processing means, and the like described above may be implemented by hardware by, for example, being designed in an integrated circuit. Also, each of the configurations, functions, and the like may be implemented by software for causing a processor to interpret and execute a program embodying the respective functions. Information such as a program, a table, and a file for implementing each of the functions can be held in a recording device such as a memory, a hard disk, or a solid state drive (SSD), or in a recording medium such as an integrated circuit (IC) card, a secure digital (SD) card, or an optical disc.

### Reference Signs List

1 Network (NW)
100 Client
110 Client HW
111, 211 NIC
120, 220 OS
130, 230 Userland APL
131 User application part
132 ACC function proxy reception part
133 ACC-NIC common data creation part
134 Polling data transmission & data acquisition part
135 Function & argument data parsing part
136 ACC function proxy response part
200 Server
210 Server HW
212 Accelerator
231 Polling data acquisition & ACC offload successive instruction part (ACC offload successive instruction part)
232 ACC-NIC common data parsing part
233 ACC function proxy execution part
234 Distributed data ACC collective transfer instruction part
235 ACC function & return value data acquisition part
236 Response data transmission part
350 Accelerator function argument data packet
354, 364 Successive data address storage area
360 Accelerator function return value packet
1000, 1000A, 1000B Arithmetic processing offload system

## Claims

1. An arithmetic processing offload system comprising a client and a server connected thereto via a network and a network interface card (NIC), the client configured to offload specific processing of an application to an accelerator installed in the server in order to perform arithmetic processing,
wherein the server includes a userland application configured to cooperate with the accelerator while bypassing an OS, and
wherein the userland application includes an accelerator (ACC)-NIC common data parsing part configured to parse reception data in which an input data format of an ACC utilizing function and an NIC reception data format are made common.

2. The arithmetic processing offload system according to claim 1, further comprising a distributed data ACC collective transfer instruction part configured to instruct the accelerator to collectively transfer data received in a distributed manner as packets by the ACC-NIC common data parsing part as is to the accelerator in a state of being distributed on a memory of a userland.

3. The arithmetic processing offload system according to claim 2,
wherein the distributed data ACC collective transfer instruction part is further configured to, based on an inputted list of a plurality of unconcatenated data areas, instruct a distributed data transfer function of the accelerator to collectively transfer data of a plurality of areas to the accelerator without performing data concatenation.

4. The arithmetic processing offload system according to claim 1, further comprising an ACC offload successive instruction part configured to perform data arrival check on the NIC by polling in a busy loop, and when data has arrived, perform reception processing and instruct the ACC-NIC common data parsing part to, in succession to the processing, successively perform parsing of ACC offload processing.

5. An arithmetic processing offload method for an arithmetic processing offload system comprising a client and a server connected thereto via a network and a network interface card (NIC), the client configured to offload specific processing of an application to an accelerator installed in the server to perform arithmetic processing,
wherein the server includes a userland application that cooperates with the accelerator while bypassing an OS, and
wherein the method comprises a step of parsing, by the userland application, reception data in which an input data format of an accelerator (ACC) utilizing function and an NIC reception data format are made common.

6. A program for a computer serving as a server of an arithmetic processing offload system comprising a client and the server, the server connected via a network and a network interface card (NIC), the client configured to offload specific processing of an application to an accelerator installed in the server to perform arithmetic processing, the server including a userland application configured to cooperate with the accelerator while bypassing an OS, the program causing the computer to perform:
an accelerator (ACC)-NIC common data parsing procedure of parsing reception data in which an input data format of an ACC utilizing function and an NIC reception data format are made common.
